# EUROPEAN PATENT APPLICATION

(11) **EP 4 582 732 A1**
(43) Date of publication of application: **09.07.2025**
(21) Application number: 24315002.6
(22) Date of filing: 05.01.2024
(51) Int. Cl.: F17C 7/04

(54) **METHOD FOR REMOVING BOIL OFF GAS WHEN STORING CRYOGENIC FLUID AND CORRESPONDING SYSTEM**

(71) Applicant: Cryostar SAS, 68220 Hesingue (FR)
(72) Inventor: Bonnefous, Patrice, 68220 Hesingue (FR); Fauvel, Philippe, 68220 Hesingue (FR)
(74) Representative: Reuß, Stephanie

(57) **Abstract**

The invention relates to a method for removing boil off gas when storing cryogenic fluid (H2) in a storage tank (110), wherein a cryogenic pump (130) is used to pump fluid from the storage tank (110), in a liquid phase, to a vaporizer (140), wherein, in the vaporizer (140), the fluid is vaporized and provided in a gaseous phase, wherein the boil off gas is provided to a thermally driven compressor (120), and compressed by the thermally driven compressor (120), and wherein the thermally driven compressor (120) is operated using part of the fluid, in the liquid phase from before the vaporizer (140) as cold source (122), and using at least part of the fluid, in the gaseous phase from after the vaporizer as hot source (124).

## Description

The present invention relates to a method for removing boil off gas when storing cryogenic fluid in a storage tank, and to a corresponding system.

### Background

Cryogenic liquids like hydrogen (i.e., cryogenic hydrogen) can be stored in storage tanks. When using a cryogenic pump to withdraw the cryogenic liquid from the storage tank, boil off gas is generated due to heat input, cooling down of the pump and friction.

Such boil off gas increases the tank pressure what usually leads to release of the boil off gas to atmosphere. According to costs and greenhouse effect of the boil off gas, this boil off gas should be treated. A common solution is to compress the boil off gas in gaseous phase in a buffer tank, e.g., a high pressure buffer. Such treatment of boil off gas incurs additional energy and costs of operation. Thus, an object of the present invention is to provide a way to improve energy efficiency and/or reduce costs for removing boil off gas when storing cryogenic fluid.

### Disclosure of the invention

This object is achieved by providing a method for removing boil off gas when storing cryogenic fluid and a corresponding system with the features of the independent claims. Embodiments of the invention are the subject of the dependent claims and of the description that follows.

The invention relates to storing cryogenic fluids like cryogenic hydrogen in storage tanks and removing (or treating) boil off gas that occurs in such storing. Typically, using a cryogenic pump to withdraw the fluid from the storage tank results in such boil off gas due to heat input, cooling down of the pump and friction. Whereas most of the fluid is present in liquid phase in the storage tank, the boil off gas of such cryogenic fluid is in gaseous phase and increases the pressure in the storage tank. Such, in order to prevent too high pressure and any damage that might occur, the boil off gas is removed, e.g., from the storage tank. In order not to release the boil off gas to atmosphere, the boil off gas can be stored in a buffer tank; in order to do so, compression of the boil of gas is typically necessary.

Within the present invention, a cryogenic pump, a vaporizer and a thermally driven compressor are used. The cryogenic pump is used to pump the fluid from the storage tank, in a liquid phase, to the vaporizer. The cryogenic pump can be, for example, a cryogenic piston pump or of another type.. The vaporizer can be, for example an atmospheric or ambient vaporizer that causes the liquid cryogenic fluid to be vaporized by heat exchange with ambient air. After the vaporizer, the fluid is, thus, present in gaseous phase, i.e., the vaporizer provides the fluid in gaseous phase. It is noted that once the fluid has been vaporized and/or heated, it is typically not called a cryogenic fluid anymore.

The boil off gas is provided to the thermally driven compressor, such that the boil off gas can be compressed by the thermally driven compressor. After having been compressed, the boil off gas can be provided to a buffer tank, e.g., a higher pressure buffer tank. In other words, the boil off gas is compressed and can then be stored in gaseous phase in order not to be released to atmosphere.

The compressor is a thermally driven compressor, i.e., a compressor that uses a cold source and a hot source, i.e., two sources of different temperature, for operation. There are different types of such thermally driven compressors, e.g., based on physical principles like absorption, adsorption, thermal, or other principles. In an embodiment, a metal hydride compressor is used as said thermally driven compressor. Such metal hydride compressor is working on the principle of reversible absorption and desorption of hydrogen in a metal hydride driven by two heat sources, i.e., the mentioned cold and hot source.

The thermally driven compressor used within the present invention is operated using part of the cryogenic fluid, in the liquid phase from before the vaporizer as cold source, and using at least part of the fluid, in the gaseous phase from after the vaporizer as hot source.

In this way, the system takes profit of the low temperature available at the vaporizer inlet and almost ambient temperature available at the vaporizer outlet to generate the delta of temperature necessary for operating the compressor. The fluid, after having been vaporized in the vaporizer and provided in the gaseous phase, can also be provided to said buffer tank.

In an embodiment, a further or second vaporizer can be provided. Then, the fluid, after having been vaporized in the first vaporizer and provided in gaseous phase to the compressor (hot source), is (still in the gaseous phase) provided to said further vaporizer for heat up and then provided to said buffer tank. In this way, an acceptable temperature for the fluid in the buffer tank can be achieved. This is because the temperature of the fluid after the (first) vaporizer can have been cooled by the compressor.

In an embodiment, the part of the fluid in the liquid phase from before the vaporizer and the at least part of the fluid in the gaseous phase are provided to the thermally driven compressor in an alternating manner in order to operate the thermally driven compressor. In this way, appropriate cold and hot cycles for the thermally driven compressor can be provided. Such alternating manner can be achieved by providing appropriate valve in the respective lines or pipes, which are closed and opened accordingly.

In the example of the metal hydride compressor or another compressor working on the principle of reversible absorption and desorption, for the absorption phase at low temperature, the flow upstream, i.e., from before, the vaporizer can be routed to the compressor, and for the desorption phase at high temperature, the flow downstream, i.e., from after the vaporizer can be routed to the compressor.

In an embodiment, at least a part of the boil off gas is provided to the thermally driven compressor from a top of the storage tank, e.g., the ceiling of the storage tank or a region near the ceiling. At the top of the storage tank, the boil off gas is present due to the lower density than of the liquid phase of the fluid.

in an embodiment, at least a part of the boil off gas is provided to the thermally driven compressor from a return line of the cryogenic pump. In this way, heating of the storage tank is prevented.

Appropriate valves and lines or pipes can be provided in order to allow either the one or the other or even both ways of providing the boil off gas to the thermally driven compressor.

An advantage of such system is that it uses a wasted energy released by the pumping system (cold energy was generated by the liquefaction system at the stage of liquefaction) to solve a boil off gas issue (partially) generated by the pumping system. The boil off gas is pumped into the same line as the vaporizer outlet. The general solution - storage tank, cryogenic pump, thermally driven compressor, and vaporizer-is, thus an autonomous solution with reduced interfaces. No additional connection and no additional power are required.

Even though this system works with any cryogenic fluid, this is particularly valuable with hydrogen because release of hydrogen to atmosphere should be avoided for cost and greenhouse effect reasons, the low temperature of liquid hydrogen increases the heat entries, so quantities of boil off gas generated, and the low temperature of liquid hydrogen increases the delta of temperature between cold and hot sources, so increase the capacity of the thermal compressor.

Further advantages and embodiments of the invention will be apparent from the description and the accompanying drawing. The invention is illustrated schematically by means of embodiments in the drawing and is described below with reference to the drawing.

### Short description of the figures

- Fig. 1: illustrates a system according to an embodiment of the invention;
- Figs. 2a, 2b: illustrate a system according to another embodiment of the invention; and
- Figs. 3a, 3b: illustrate a system according to another embodiment of the invention.

### Detailed description of the figures

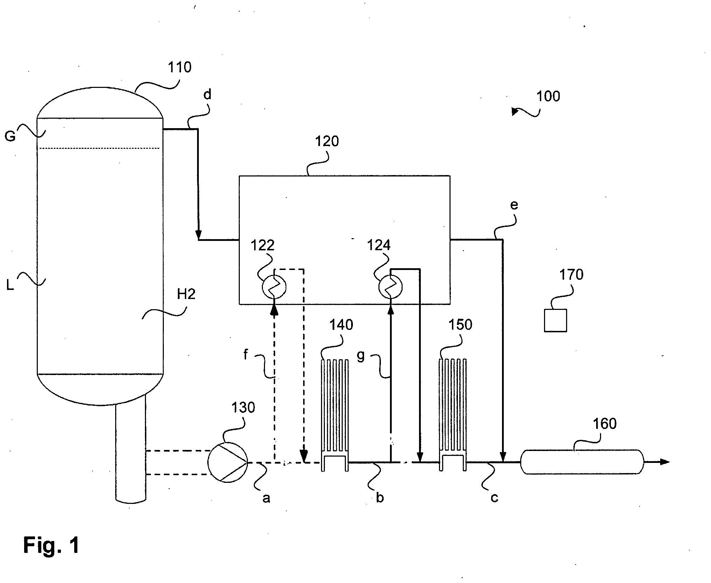

Fig. 1 schematically illustrates a system 100 according to an embodiment of the invention. The system 100 comprises a storage tank 110, a cryogenic pump 130, a vaporizer 140 and a thermally driven compressor 120. By means of example, system 100 comprises a further vaporizer 150 and a buffer tank 160. In addition, the system 100 can comprise lines or pipes for guiding the liquid from and to different components as shown in the Fig. In addition, vales can be provided for regulating and provided a required flow.

The storage tank 110 is configured for storing cryogenic fluid (at least when stored, the fluid is cryogenic); by means of example, hydrogen or cryogenic hydrogen H2 is used as such cryogenic fluid. The cryogenic pump can be, for example, a cryogenic piston pump or of another type. The vaporizer 140 can be, for example an atmospheric or ambient vaporizer that causes the liquid cryogenic fluid to be vaporized by heat exchange with ambient air. The further vaporizer 150 can be of the same type.

The thermally driven compressor 120 uses a cold source 122 and a hot source 124, i.e., two sources of different temperature, for operation; by means of example, the cold source 122 and the hot source 124 are shown as heat exchangers. The thermally driven compressor is, for example, a metal hydride compressor. As mentioned above, however, other types of thermally driven compressors can be used. The buffer tank 160 can be, e.g., a higher pressure buffer tank.

In the storage tank 110, the cryogenic fluid H2 is stored; the cryogenic fluid can be provided to the storage tank 110 by means of another cryogenic pump. In the storage tank, the cryogenic fluid is mainly present in the liquid phase, indicated by L. However, due to heat input and friction, boil off gas is generated, i.e., part of the cryogenic fluid H2 is converted into the gaseous phase, indicated by G. For illustration purposes, a dashed line indicates a separation line between the liquid phase

By means of the cryogenic pump 130, cryogenic fluid H2 from the storage tank 110, in a liquid phase, is provided to vaporizer 140, stream a. By means of the vaporizer 140, the fluid H2 is vaporized such that the fluid is provided, after or downstream the vaporizer 140, in a gaseous phase, stream b. Afterwards, the fluid H2 is provided to the further vaporizer 150 and then, stream c, to the buffer tank 160. Without the further vaporizer 150, stream b would be provided to the buffer tank 160.

Boil off gas from the storage tank 110 is provided to the thermally driven compressor 120, stream d, which compresses the boil off gas. The compressed boil off gas is then provided from the thermally driven compressor 120, stream e, to the buffer tank 160. From the buffer tank 160, the boil off gas can further be processed or treated.

As mentioned, the thermally driven compressor 120 uses a cold source and a hot source for operation. For the cold source 122, part of the fluid, in the liquid phase from before the vaporizer is used; this part of the fluid can be guided to the thermally driven compressor 120, stream f, used as the cold source 122, and guided back to stream a before the vaporizer 140. For the hot source 124, part of the fluid, in the gaseous phase from after the vaporizer is used; this part of the fluid can be guided to the thermally driven compressor 120, stream g, used as the hot source 124, and guided back to stream b after the vaporizer 140. It is noted that cold source and hot source refer to two heat sources of different temperature, a lower temperature (cold source) and a higher temperature (hot source), irrespective of the specific temperatures.

In Fig. 1, streams or flows of the fluid H2 in liquid phase are indicated by dashed lines, and streams or flows of the fluid H2 in gaseous phase are indicate by solid lines.

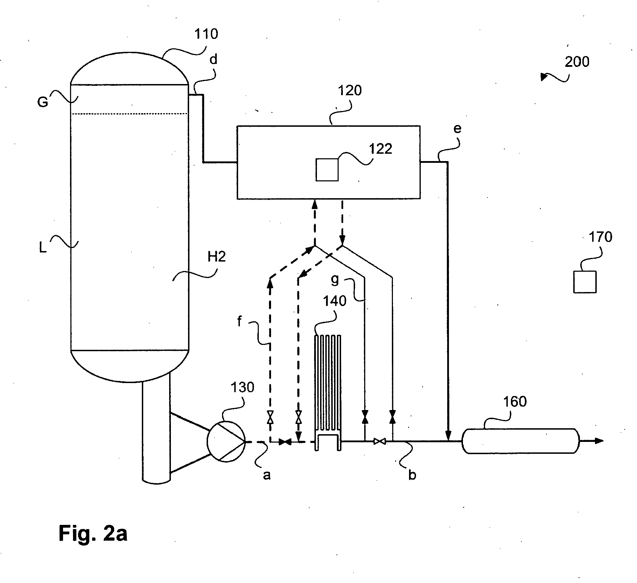

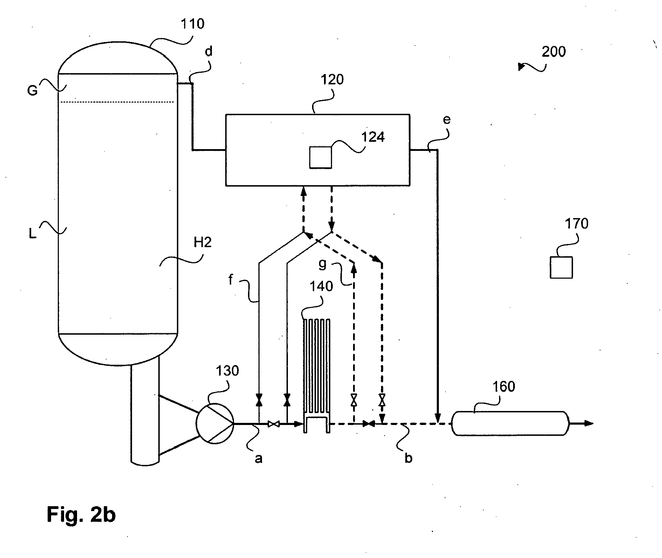

In addition, system 100 comprises, by means of example, a processing unit 170 that is configured to operate the system 100 such the part of the fluid in the liquid phase from before or upstream the vaporizer, stream f, and the at least part of the fluid in the gaseous phase from after or downstream the vaporizer, stream g, are provided to the thermally driven compressor 120 in an alternating manner in order to operate the thermally driven compressor. This may include opening and closing appropriate valves; this will be explained in more detail with respect to Figs. 2a, 2b.

Figs. 2a, 2b schematically illustrate a system 200 according to another embodiment of the invention. The system 200 comprises is similar to system 100, except for the missing further vaporizer. Like components are referred to by the same reference numerals for ease of understanding.

In Fig. 2a, only the cold source activity to 122/124 in the thermally driven compressor 120 is shown, and in Fig. 2b, only the hot source activity to 122/124 is shown. In this example, the same chamber in the thermal compressor is heated or cooled; thus, the same exchanger is used. There is only one exchanger 122/124 being either the hot or cold source. In order to provide the cold source to 122/124 in the thermally driven compressor 120, see Fig. 2a, the part of the fluid, in the liquid phase from before the vaporizer, stream f, is to be provided to the thermally driven compressor 120, and guided back to stream a.

In order to provide the hot source to 122/124 in the thermally driven compressor 120, see Fig. 2b, the part of the fluid, in the gaseous phase from after the vaporizer, stream g, is to be provided to the thermally driven compressor 120, and guided back to stream b.

This is, in addition, illustrated by using dashed lines for the active flows in Figs. 2a, 2b. In Fig. 2a the flow f is active and flow g is in-active, i.e., not used. Accordingly, the valves for flow f are opened, and the valves for flow g are closed. In Fig. 2b the flow f is in-active and flow g is active, i.e., flow f is not used. Accordingly, the valves for flow f are closed, and the valves for flow g are opened.

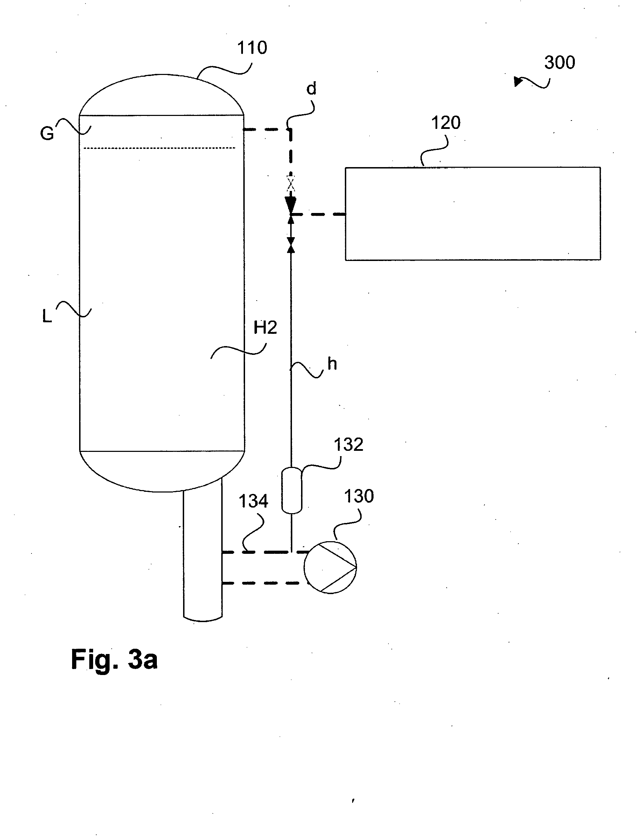

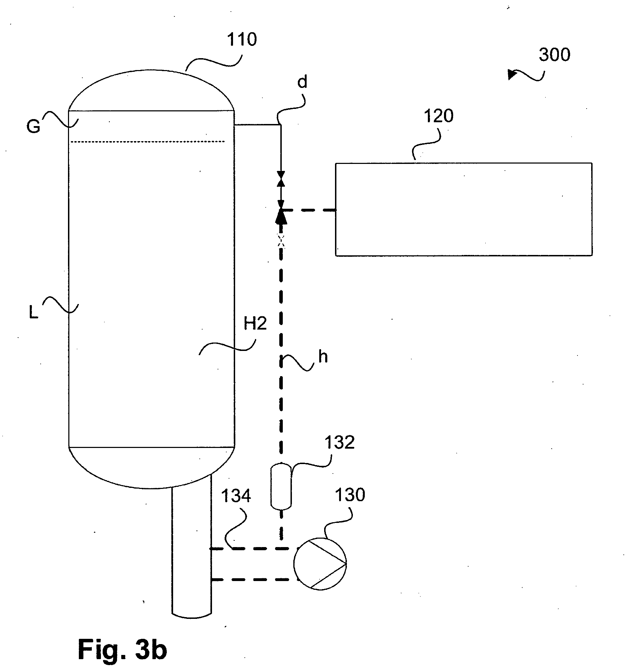

Figs. 3a, 3b schematically illustrate a system 300 according to another embodiment of the invention. The system 300 comprises is similar to system 100, however, only some parts or components are shown. Like components are referred to by the same reference numerals for ease of understanding.

As can be seen in Fig. 3a, at least a part of the boil off gas is provided to the thermally driven compressor 120 from a top of the storage tank 110, indicated by stream or flow d (in a corresponding line or pipe). Alternatively, as can be seen in Fig. 3b, at least a part of the boil off gas can be provided to the thermally driven compressor 120 from a return line 134 of the cryogenic pump, via stream or flow h. This is, in addition, illustrated by using dashed lines for the active flows in Figs. 3a, 3b. In Fig. 3a the flow d is active and flow h is in-active, i.e., not used. Accordingly, the valve for flow d is opened, and the valve for flow h is closed. In Fig. 3b the flow d is in-active and flow h is active, i.e., flow d is not used. Accordingly, the valve for flow d is closed, and the valve for flow h is opened. In addition, a gas phase separator 132 is provided, by means of example, in order to supply the thermal compressor only with gas phase.

It is noted that both, flows d and h can be used to provide boil off gas to the thermally driven compressor120.

## Claims

1. A method for removing boil off gas when storing cryogenic fluid (H2) in a storage tank (110),
wherein a cryogenic pump (130) is used to pump fluid from the storage tank (110), in a liquid phase, to a vaporizer (140),
wherein, in the vaporizer (140), the fluid is vaporized and provided in a gaseous phase,
wherein the boil off gas is provided to a thermally driven compressor (120), and compressed by the thermally driven compressor (120), and
wherein the thermally driven compressor (120) is operated using part of the fluid, in the liquid phase from before the vaporizer (140) as cold source (122), and using at least part of the fluid, in the gaseous phase from after the vaporizer as hot source (124).

2. The method of claim 1, wherein the part of the fluid in the liquid phase from before the vaporizer and the at least part of the cryogenic fluid in the gaseous phase, from after the vaporizer, are provided to the thermally driven compressor in an alternating manner in order to operate the thermally driven compressor.

3. The method of claim 1 or 2, wherein at least a part of the boil off gas is provided to the thermally driven compressor (120) from a top of the storage tank (110).

4. The method of any one of the preceding claims, wherein at least a part of the boil off gas is provided to the thermally driven compressor (120) from a return line (134) of the cryogenic pump (130).

5. The method of any one of the preceding claims, wherein the boil off gas, after having been compressed by the compressor, is provided to a buffer tank (160).

6. The method of claim 5, wherein the fluid, after having been vaporized in the vaporizer (140) and provided in the gaseous phase, is provided to said buffer tank (160).

7. The method of claim 6, wherein the fluid, after having been vaporized in the vaporizer and provided in the gaseous phase, is provided to a further vaporizer (150) and then provided to said buffer tank.

8. The method of any one of the preceding claims, wherein hydrogen is used as the fluid.

9. The method of any one of the preceding claims, wherein a metal hydride compressor is used as said thermally driven compressor (120).

10. A system (100) comprising a storage tank (110) configured for storing cryogenic fluid (H2), a cryogenic pump (130), a vaporizer (140) and a thermally driven compressor (120),
wherein said cryogenic pump (130) is configured to pump fluid (H2) from the storage tank (110), in a liquid phase, to said vaporizer (140),
wherein said vaporizer (140) is configured to vaporize the cryogenic fluid (H2) and to provide the fluid in a gaseous phase,
wherein said thermally driven compressor (120) is configured to receive the boil off gas (G) and compress the boil off gas, and
wherein the system (100) is configured to operate said thermally driven compressor (120) by using part of the fluid, in the liquid phase from before the vaporizer as cold source (122), and using at least part of the fluid, in the gaseous phase from after the vaporizer (140) as hot source (124).

11. The system (100) of claim 10, further configured to provide the part of the fluid in the liquid phase from before said vaporizer (140) and the at least part of the fluid in the gaseous phase from after said vaporizer to said thermally driven compressor (120) in an alternating manner in order to operate said thermally driven compressor (120).

12. The system (100) of claim 10 or 11, further configured to provide at least a part of the boil off gas (G) to said thermally driven compressor (120) from a top of the storage tank (121).

13. The system (100) of any one of claims 10 to 12, further configured to provide at least a part of the boil off gas to said thermally driven compressor (120) from a return line of said cryogenic pump.

14. The system of any one of claims 10 to 13, further comprising a buffer tank, wherein the system is configured to provide the boil off gas, after having been compressed by the compressor, to said buffer tank.
